(19) Europäisches Patentamt

European Patent Office

Office européen des brevets

(11) **EP 2 876 801 A1**

(12) **EUROPEAN PATENT APPLICATION**
published in accordance with Art. 153(4) EPC

(43) Date of publication:
27.05.2015 Bulletin 2015/22

(51) Int Cl.:
*H02M 7/48* (2007.01)      *H02M 7/12* (2006.01)
*H02M 7/797* (2006.01)

(21) Application number: 12881373.0

(22) Date of filing: 20.07.2012

(86) International application number:
PCT/JP2012/068509

(87) International publication number:
WO 2014/013620 (23.01.2014 Gazette 2014/04)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Yaskawa Denki Kitakyushu-shi, Fukuoka 806-0004 (JP)**

(72) Inventors:
• **NARITA, Tetsumi**
  **Kitakyushu-shi**
  **Fukuoka 806-0004 (JP)**

• **YAMANAKA, Katsutoshi**
  **Kitakyushu-shi**
  **Fukuoka 806-0004 (JP)**

(74) Representative: **Grünecker Patent- und Rechtsanwälte**
  **PartG mbB**
  **Leopoldstraße 4**
  **80802 München (DE)**

(54) **POWER CONVERSION DEVICE**

(57)      A power converter according to an embodiment includes a power conversion unit and a controller. The power conversion unit includes a plurality of first bidirectional switches that are disposed between a plurality of DC side terminals and a plurality of AC side terminals, and a second bidirectional switch and a reactor that are disposed between the AC side terminals. The controller keeps the second bidirectional switch ON in any one or both of a free-wheeling mode in a step-down power conversion from DC power into AC power, and an energy storing mode in which electric energy is stored in the reactor in a step-up power conversion from the AC power to the DC power.

FIG.1

EP 2 876 801 A1

## Description

Field

The disclosed embodiments relate to a power converter.

Background

Conventionally known are power converters that performs power conversion between direct current (DC) power and alternating current (AC) power (see Patent Literature 1, for example). The power converter includes a plurality of switches, and controls ON/OFF of the switches.

Citation List

Patent Literature

Patent Literature 1: Japanese Patent Application Laid-open No. 2011-041457

Summary

Technical Problem

In such a conventional power converter, however, because a plurality of switches are disposed on a current path that is used in the free-wheeling mode, a conduction loss occurs correspondingly to the number of switches. Furthermore, in a step-down mode in the DC-to-AC conversion, or in a step-up mode in the AC-to-DC conversion, because one AC side terminal is connected alternatingly to the positive terminal and to the negative terminal on the DC side via the switches of which ON and OFF are controlled, a pulse-like common-mode surge voltage is generated at the DC side terminals.

One aspect of the embodiments is made in consideration of the above, and an object of the present invention is to provide a power converter capable of reducing a conduction loss by reducing the number of switches on the current path used in the free-wheeling mode, and of suppressing application of a pulse-like common-mode surge voltage to the DC side terminals, in the step-down mode in the DC-to-AC conversion and in the step-up mode in the AC-to-DC conversion.

Solution to Problem

A power convert to an embodiment includes power conversion unit and a controller. The power conversion unit includes a plurality of first bidirectional switches, a second bidirectional switch, and a reactor. The plurality of first bidirectional switches are disposed between a plurality of direct current (DC) side terminals connected to a DC power supply or a DC load and a plurality of alternating current (AC) side terminals connected to an AC load or an AC power supply. The second bidirectional switch and the reactor are disposed between the AC side terminals. The controller controls the power conversion unit to perform power conversion between DC power and AC power. The controller keeps the second bidirectional switch ON in any one of or both of a free-wheeling mode in a step-down power conversion from the DC power into the AC power, and an energy storing mode in which electric energy is stored in the reactor in a step-up power conversion from the AC power to the DC power.

Advantageous Effects of Invention

According to one aspect of the embodiments, it is possible to provide a power converter capable of suppressing application of a pulse-like common-mode surge voltage to the DC side terminal.

Brief Description of Drawings

FIG. 1 is a schematic of a configuration of a power converter according to a first embodiment.
FIG. 2 is a schematic of a configuration of a bidirectional switch.
FIG. 3 is a first schematic for explaining a controlling operation performed by a controller in one cycle of the single-phase AC voltage Vac.

FIG. 4 is a second schematic for explaining the controlling operation performed by the controller in one cycle of the single-phase AC voltage Vac.

FIG. 5A is a schematic illustrating a state of bidirectional switches in a positive step-down mode.

FIG. 5B is a schematic illustrating another state of the bidirectional switches in the positive step-down mode.

FIG. 6A is a schematic illustrating a state of the bidirectional switches in a positive step-up mode.

FIG. 6B is a schematic illustrating another state of the bidirectional switches in the positive step-up mode.

FIG. 7A is a schematic illustrating a state of the bidirectional switches in a negative step-down mode.

FIG. 7B is a schematic illustrating another state of the bidirectional switches in the negative step-down mode.

FIG. 8A is a schematic illustrating a state of the bidirectional switches in a negative step-up mode.

FIG. 8B is a schematic illustrating another state of the bidirectional switches in the negative step-up mode.

FIG. 9 is a schematic of a configuration of a power converter according to a second embodiment.

FIG. 10 is a first schematic for explaining a controlling operation performed by a controller in one cycle of the single-phase AC voltage.

FIG. 11 is a second schematic for explaining the controlling operation performed by the controller in one cycle of the single-phase AC voltage.

FIG. 12A is a schematic illustrating a state of the bidirectional switches in a positive step-down mode.

FIG. 12B is a schematic illustrating another state of the bidirectional switches in the positive step-down mode.

FIG. 13A is a schematic illustrating a state of the bidirectional switches in a positive step-up mode.

FIG. 13B is a schematic illustrating another state of the bidirectional switches in the positive step-up mode.

FIG. 14A is a schematic illustrating a state of the bidirectional switches in a negative step-down mode.

FIG. 14B is a schematic illustrating another state of the bidirectional switches in the negative step-down mode.

FIG. 15A is a schematic illustrating a state of the bidirectional switches in a negative step-up mode.

FIG. 15B is a schematic illustrating another state of the bidirectional switches in the negative step-up mode. Description of Embodiments

Some embodiments of a power converter according to the present invention will now be explained in detail with reference to the appended drawings. The embodiments described below are not intended to limit the scope of the present invention in any way.

First Embodiment

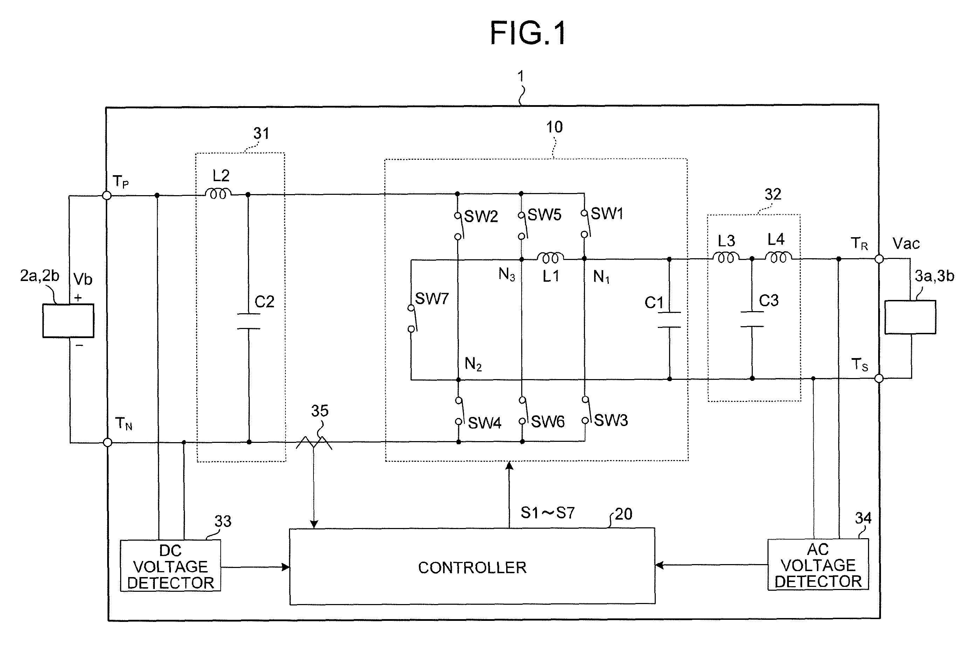

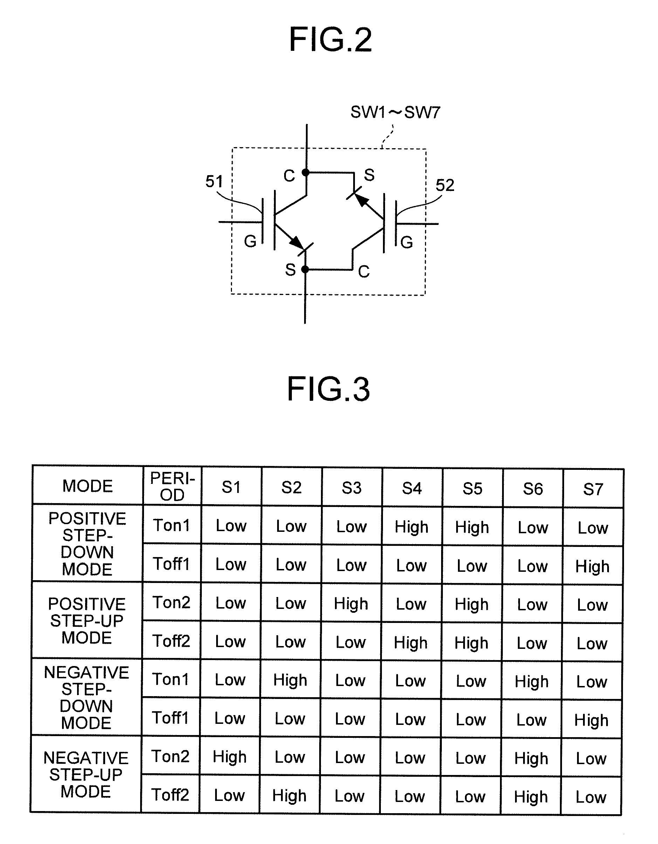

FIG. 1 is a schematic illustrating a configuration of a power converter according to a first embodiment. FIG. 2 is a schematic of a configuration of a bidirectional switch. As illustrated in FIG. 1, in this power converter 1 according to the first embodiment, a DC power supply 2a or a DC load 2b is connected to DC side terminals $T_P$ and $T_N$, and an AC load 3a or an AC power supply 3b is connected to AC side terminals $T_R$ and $T_S$. The DC side terminal $T_P$ is the DC side positive terminal, and the DC side terminal $T_N$ is the DC side negative terminal. The DC power supply 2a may be included in the power converter 1.

The power converter 1 performs bidirectional power conversion between DC power and AC power, that is, performs reversible power conversion between the DC power supply 2a/ DC load 2b and the AC load 3a/AC power supply 3b. When the power conversion is in a direction from the DC power supply 2a to the AC load 3a, the power converter 1 converts the DC voltage Vb supplied from the DC power supply 2a into a single-phase AC voltage Vac, and outputs the single-phase AC voltage Vac to the AC load 3a. When the power conversion in a direction from the AC power supply 3b to the DC load 2b, the power converter 1 converts the single-phase AC voltage Vac supplied from the AC power supply 3b into the DC voltage Vb, and outputs the DC voltage Vb to the DC load 2b.

Examples of the DC power supply 2a include a solar battery, a fuel battery, and a rechargeable battery, and examples of the DC load 2b include an electric appliance and a rechargeable battery. Examples of the AC load 3a include an electric appliance and a single-phase AC power supply, and an example of the AC power supply 3b includes a commercial single-phase AC power supply. The single-phase AC voltage Vac is typically 100 volts or 200 volts, for example, and has a frequency of 50 hertz or 60 hertz, for example.

The power converter 1 includes a power conversion unit 10, a controller 20, an LC filter 31, an LCL filter 32, a DC voltage detector 33, an AC voltage detector 34, and a DC current detector 35.

The power conversion unit 10 is connected to the DC side terminals $T_P$ and $T_N$ via the LC filter 31, and is connected to the AC side terminals $T_R$ and $T_S$ via the LCL filter 32. The power conversion unit 10 includes bidirectional switches SW1 to SW7, a reactor L1, and a capacitor C1.

As illustrated in FIG. 1, the bidirectional switches SW1 to SW6 (corresponding to an example of first bidirectional switches) are disposed between the DC side terminals $T_P$, $T_N$ and the AC side terminals $T_R$, $T_S$. The bidirectional switch SW7 (corresponding to an example of a second bidirectional switch) is disposed between the AC side terminals $T_R$ and $T_S$.

Specifically, the bidirectional switch SW1 is disposed between the DC side terminal $T_P$ and the AC side terminal $T_R$, and the bidirectional switch SW3 is disposed between the DC side terminal $T_N$ and the AC side terminal $T_R$. In other words, the bidirectional switches SW1 and SW3 are connected serially between the DC side terminals $T_P$ and $T_N$, and a connection point $N_1$ between the bidirectional switches SW1 and SW3 is connected to the AC side terminal $T_R$.

The bidirectional switch SW2 is disposed between the DC side terminal $T_P$ and the AC side terminal $T_S$, and the bidirectional switch SW4 is disposed between the DC side terminal $T_N$ and the AC side terminal $T_S$. In other words, the bidirectional switches SW2 and SW4 are connected serially between the DC side terminals $T_P$ and $T_N$, and a connection point $N_2$ of the bidirectional switches SW2 and SW4 is connected to the AC side terminal $T_S$.

The bidirectional switch SW5 is disposed between the DC side terminal $T_P$ and the AC side terminal $T_R$ via the reactor L1, and the bidirectional switch SW6 is disposed between the DC side terminal $T_N$ and the AC side terminal $T_R$ via the reactor L1. In other words, the bidirectional switches SW5 and SW6 are connected serially between the DC side terminals $T_P$ and $T_N$, and a connection point $N_3$ between the bidirectional switches SW5 and SW6 is connected to the AC side terminal $T_R$ via the reactor L1. The reactor L1 serves to suppress a current flowing into the capacitor C1 in a step-down mode described later, and serves as a constant current source for increasing the voltage in a step-up mode described later.

The bidirectional switch SW7 is disposed on the path between the AC side terminals $T_R$ and $T_S$, and connects the AC side terminals $T_R$ and $T_S$ via the reactor L1, and the reactors L3 and L4 in the LCL filter 32. The controller 20 switches the bidirectional switch SW7 ON in a free-wheeling mode, in a manner described later.

Each of the bidirectional switches SW1 to SW7 includes, for example, unidirectional switches 51 and 52 each of which is a reverse-current blocking insulated gate bipolar transistor (IGBT), as illustrated in FIG. 2, and the unidirectional switches 51 and 52 are connected in parallel, in the opposite direction with respect to each other.

The controller 20 controls the bidirectional switches SW1 to SW7 based on a signal instructing a direction of the power conversion, voltage detection results of the DC voltage detector 33 and the AC voltage detector 34, and a current detection result of the DC current detector 35, the signal and the detection results being not illustrated. The following describes an example in which the power conversion is in a direction from the DC power supply 2a to the AC load 3a.

The power conversion operation in the direction from the AC load 3a to the DC power supply 2a is the same as the power conversion operation in the direction from the DC power supply 2a to the AC load 3a except that the current detection result from the DC current detector 35 has an opposite sign, so that the explanation of the former operation is omitted hereunder. The power conversion in the direction from the AC power supply 3b into the DC load 2b is the same as the power conversion in a direction from the DC power supply 2a into the AC load 3a.

The bidirectional switches SW1 to SW7 are driven by PWM signals S1 to S7, respectively, output from the controller 20. Each of the PWM signals S1 to S7 serves as an ON command that switches ON the corresponding one of the bidirectional switches SW1 to SW7 when the PWM signal is set to high. The control of the bidirectional switches SW1 to SW7 performed by the controller 20 will be explained later in detail. Each of the bidirectional switches SW1 to SW7 may be configured to be switched ON when the corresponding PWM signal is set to low. In such a configuration, each of the PWM signals S1 to S7 serves as an ON command when the PWM signal is set to low.

The LC filter 31 has a reactor L2 and a capacitor C2, and is connected between the DC power supply 2a and the power conversion unit 10. The LC filter 31 removes a high frequency component from the voltage output from the power conversion unit 10 to the DC power supply 2a. When the power converter 1 increases or decreases the single-phase AC voltage Vac supplied to the AC side terminals $T_R$ and $T_S$, converts the AC voltage Vac into the DC voltage Vb, and outputs the DC voltage Vb from the DC side terminals $T_P$ and $T_N$, the capacitor C2 provided between the power conversion unit 10 and the DC side terminals $T_P$ and $T_N$ serves as a smoothing capacitor.

The LCL filter 32 includes the reactors L3 and L4 that are connected serially, and a capacitor C3 connected to a connection point between the reactors L3 and L4. The LCL filter 32 is connected between the power conversion unit 10 and the AC load 3a. The LCL filter 32 removes a high frequency component from the AC voltage output from the power conversion unit 10 to the AC load 3a.

The DC voltage detector 33 detects an instantaneous voltage between the DC side terminals $T_P$ and $T_N$. The DC voltage detector 33 detects an instantaneous DC voltage Vb output from the DC power supply 2a, for example. The DC voltage detector 33 notifies the controller 20 of the detection result.

The AC voltage detector 34 detects an instantaneous voltage between the AC side terminals $T_R$ and $T_S$. The AC voltage detector 34 detects an instantaneous single-phase AC voltage Vac output from the power conversion unit 10 to the AC load 3a, for example. The AC voltage detector 34 notifies the controller 20 of the detection result.

The DC current detector 35 is disposed between the DC side terminal $T_N$ and the power conversion unit 10, and detects a current flowing between the DC side terminal $T_N$ and the power conversion unit 10. The DC current detector 35 is a current sensor using a Hall element that is a magnetoelectric transducer, for example. The disposition of the DC current detector 35 is not limited to that illustrated in FIG. 1, and the DC current detector 35 may be disposed between the DC side terminal $T_P$ and the power conversion unit 10.

The power converter 1 having such a configuration is capable of performing DC-to-AC power conversion and AC-to-DC power conversion, in a reversible manner. The controller 20 converts the DC voltage Vb into the single-phase AC voltage Vac, and converts the single-phase AC voltage Vac into the DC voltage Vb, by controlling the power conversion unit 10.

When the DC power supply 2a is a solar battery, and the AC load 3a is a single-phase AC power supply, for example, the controller 20 controls the bidirectional switches SW1 to SW7 to convert the DC voltage Vb supplied from the solar battery into a single-phase AC voltage Vac that is synchronized with the single-phase AC power supply, and outputs the single-phase AC voltage Vac to the single-phase AC power supply. In such control, the controller 20 PWM-controls the power conversion unit 10 at a ON/OFF ratio adjusted based on the DC voltage Vb of the solar battery detected by the DC voltage detector 33 and the single-phase AC voltage Vac detected by the AC voltage detector 34.

If the DC power supply 2a is a secondary battery (rechargeable battery), and the AC load 3a is a single-phase AC power supply, for example, the single-phase AC voltage Vac supplied by the single-phase AC power supply is converted into the DC voltage Vb, and the charging current is supplied to the secondary battery. In such control, the controller 20 compares the current detected by the DC current detector 35 with a current command, applies proportional integral (PI) control, for example, to the deviation, and generates a control signal. The controller 20 then PWM-controls the power conversion unit 10 at an ON/OFF ratio adjusted based on the control signal.

Explained now specifically is an exemplary operation of power conversion of the DC voltage Vb into the single-phase AC voltage Vac. When the amplitude of the single-phase AC voltage Vac is higher than the DC voltage Vb, the absolute value of the instantaneous single-phase AC voltage Vac becomes larger or lower than the DC voltage Vb in one cycle of the single-phase AC voltage Vac. When the DC voltage Vb is lower than the single-phase AC voltage Vac, it is necessary to increase the DC voltage Vb. When the DC voltage Vb is higher than the single-phase AC voltage Vac, it is necessary to decrease the DC voltage Vb.

In the power conversion of the DC voltage Vb into the single-phase AC voltage Vac, the controller 20 uses following four modes in one cycle of the single-phase AC voltage Vac to control the power conversion unit 10: a positive step-down mode, a positive step-up mode, a negative step-down mode, and a negative step-up mode.

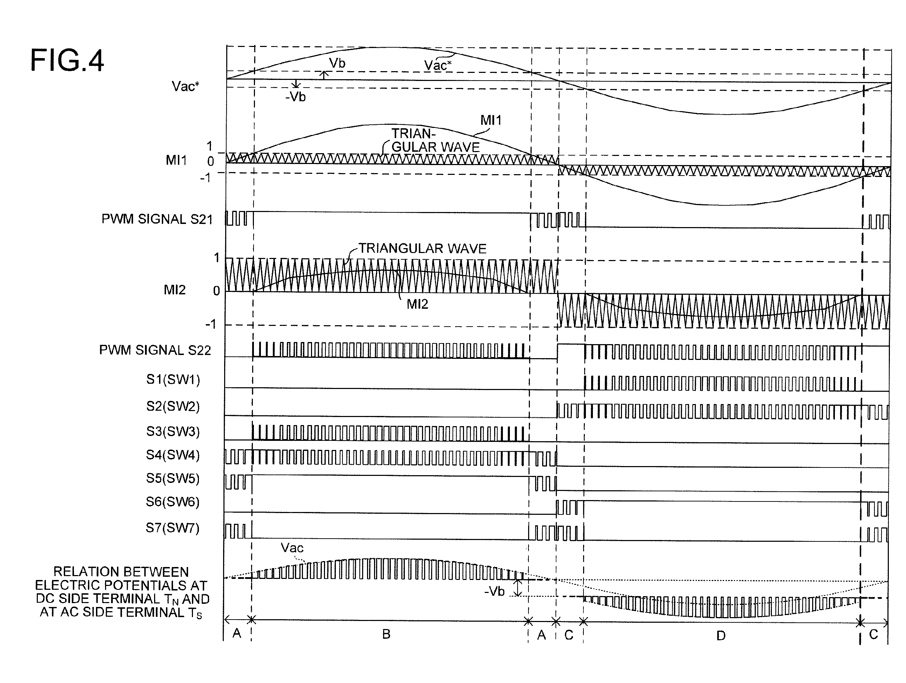

FIGS. 3 and 4 are schematics for explaining a controlling operation performed by the controller 20 in one cycle of the single-phase AC voltage Vac. FIG. 3 illustrates relations between each of the PWM signals S1 to S7 for driving the respective bidirectional switches SW1 to SW7 and each of the control modes. In the step-down modes, Ton1 denotes the period in which a PWM signal S21 described later is ON, and Toff1 denotes the period in which the PWM signal S21 is OFF. In the step-up modes, Ton2 denotes the period in which a PWM signal S22 described later is ON, and Toff2 denotes the period in which the PWM signal S22 is OFF.

FIG. 4 illustrates a relation between a transformer ratio MI1, a step-up switch ratio MI2, the PWM signal S21, and the PWM signal S22, all of which are described later, and the states of the PWM signals S1 to S7 (state of the bidirectional switches SW1 to SW7) in each of the control modes. The period A corresponds to the positive step-down mode, the period B corresponds to the positive step-up mode. The period C corresponds to the negative step-down mode, and the period D corresponds to the negative step-up mode.

The PWM signal S21 is a PWM signal determined based on a transformer ratio MI1 represented by a ratio of the output voltage command Vac* with respect to the DC voltage Vb at the DC power supply 2a. The transformer ratio MI1 is expressed as following Equation (1):

$$\mathrm{MI1} = \mathrm{Ton1/Tc1} = |\mathrm{Vac}^*|/\mathrm{Vb} \quad (1)$$

where Tc1 denotes a constant period of a PWM control cycle achieved by the PWM signal S21, and Ton1 denotes the period in which the PWM signal S21 is ON.

The PWM signal S22 is a PWM signal determined based on the step-up switch ratio MI2. The step-up switch ratio MI2 is expressed as following Equation (2):

$$\mathrm{MI2} = \mathrm{Ton2/Tc2} = 1 - 1/\mathrm{MI1} \quad (2)$$

where Tc2 denotes the constant period of a PWM control cycle achieved by the PWM signal S22, and Ton2 denotes the period in which the PWM signal S22 is ON.

The output voltage command Vac* is a command generated by the controller 20, and expressed as following Equation (3), using an effective voltage Vo* of the single-phase AC voltage Vac and a frequency fo* of the single-phase AC voltage Vac:

$$Vac^* = Vop^*cos\omega o^*t = \sqrt{2}Vo^*cos2\pi fo^*t \quad (3)$$

where Vop* is a peak voltage command for the single-phase AC voltage Vac, and ωo* is an angular frequency command.

The step-up switch ratio MI2 is limited so as not to be lower than zero. When the transformer ratio MI1 is less than one, therefore, the step-up switch ratio MI2 is fixed to zero. The transformer ratio MI1 and the step-up switch ratio MI2 are positive values by definition, but are illustrated as being negative when the output voltage command Vac* is negative, for the purpose of convenience. The control modes will now be specifically explained one by one.

Positive Step-Down Mode

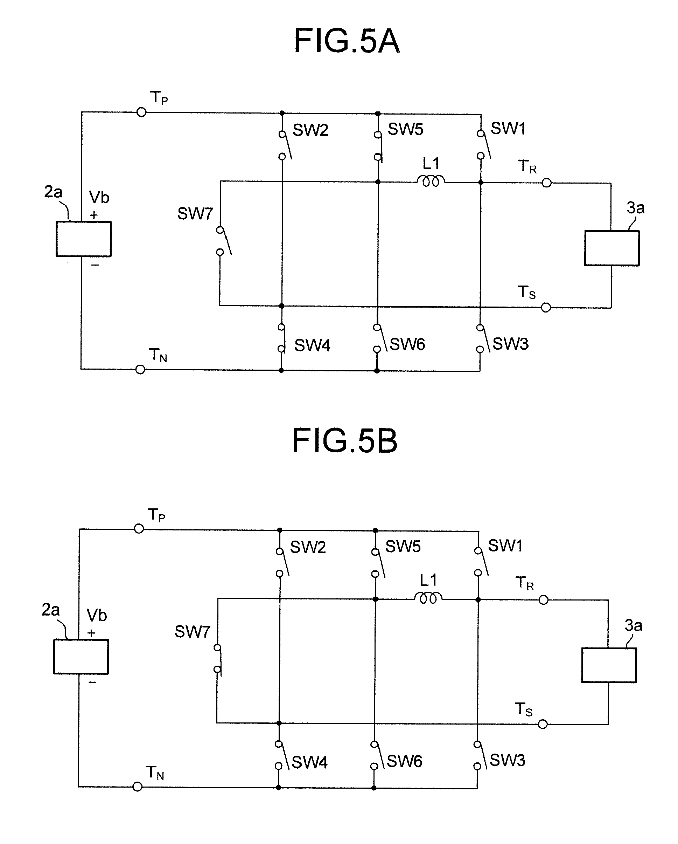

To begin with, the positive step-down mode will be explained. In the positive step-down mode, the controller 20 switches ON the bidirectional switches SW4, SW5 and the bidirectional switch SW7 alternatingly (see FIGS. 3 and 4), so that the DC voltage Vb is output from the power conversion unit 10. In the positive step-down mode, the PWM signals S4, S5 for controlling the bidirectional switches SW4, SW5, respectively are the same as the PWM signal S21, and the PWM signal S7 for controlling the bidirectional switch SW7 is a reversal of the PWM signal S21.
The LCL filter 32 removes the high frequency component from the output from the power conversion unit 10, and the resultant voltage is output to the AC load 3a. In this manner, the DC voltage Vb is decreased, and the positive voltage portion of the absolute single-phase AC voltage Vac that is lower than the DC voltage Vb is output to the AC load 3a.
The state of the bidirectional switches SW1 to SW7 in the positive step-down mode will now be explained. FIGS. 5A and 5B are schematics illustrating the state of the bidirectional switches SW1 to SW7 in the positive step-down mode.
In the positive step-down mode, when the bidirectional switches SW4 and SW5 are ON, and the bidirectional switch SW7 is OFF, the switching state will be as illustrated in FIG. 5A. The current therefore flows through a path from the positive terminal of the DC power supply 2a to the negative terminal of the DC power supply 2a via the bidirectional switch SW5, the reactor L1, the AC load 3a, and the bidirectional switch SW4.
When the bidirectional switches SW4 and SW5 are OFF and the bidirectional switch SW7 is ON, the switching state will be as illustrated in FIG. 5B. The current therefore flows in a free-wheeling mode, that is, flows from one end of the bidirectional switch SW7 to the other end of the bidirectional switch SW7 via the reactor L1 and the AC load 3a. In this mode, because the current flows through only one bidirectional switch, the conduction loss can be reduced.

Positive Step-up Mode

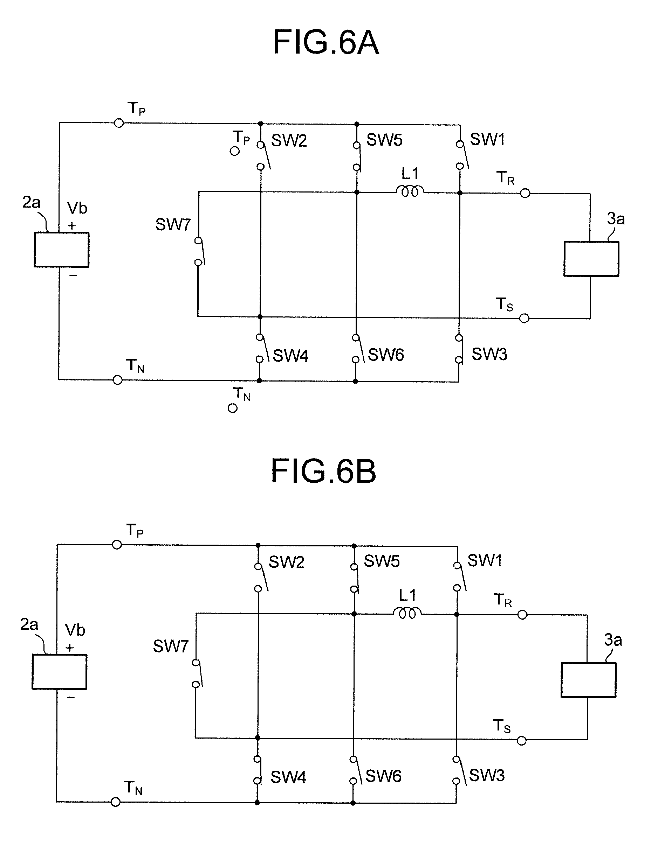

The positive step-up mode will now be explained. In the positive step-up mode, the controller 20 always keeps the bidirectional switch SW5 ON, and switches ON the bidirectional switch SW3 and the bidirectional switch SW4 alternatingly (see FIGS. 3 and 4).
This allows the reactor L1 to store electric energy, and to discharge the stored electric energy. In the positive step-up mode, the PWM signal S3 for controlling the bidirectional switch SW3 is the same as the PWM signal S22, and the PWM signal S4 for controlling the bidirectional switch SW4 is a reversal of the PWM signal S22.
The electric energy discharged from the reactor L1 is smoothed out by the capacitor C1, and output from the power conversion unit 10. In this manner, the DC voltage Vb is increased, and a positive voltage portion of the absolute single-phase AC voltage Vac that is higher than the DC voltage Vb is output to the AC load 3a.
The state of the bidirectional switches SW1 to SW7 in the positive step-up mode will now be explained. FIGS. 6A and 6B are schematics illustrating the state of the bidirectional switches SW1 to SW7 in the positive step-up mode.
In the positive step-up mode, when the bidirectional switches SW3 and SW5 is ON and the bidirectional switch SW4 is OFF, the switching state will be as illustrated in FIG. 6A. The current therefore flows through a path from the positive terminal of the DC power supply 2a to the negative terminal of the DC power supply 2a via the bidirectional switch SW5, the reactor L1, and the bidirectional switch SW3. In this manner, current energy is charged to the reactor L1.
From this state, when the bidirectional switch SW3 is switched OFF, and the bidirectional switch SW4 is switched ON, the switching state will be as illustrated in FIG. 6B. In this manner, a path is formed from the positive terminal of the DC power supply 2a to the negative terminal of the DC power supply 2a via the bidirectional switch SW5, the reactor L1, the AC load 3a, and the bidirectional switch SW4, and the electric energy charged in the reactor L1 is discharged to the AC load 3a.
In the manner described above, in the positive step-up mode, the controller 20 always keeps the bidirectional switch SW5 ON, and switches ON the bidirectional switch SW3 and the bidirectional switch SW4 alternatingly, to output an increased positive pulse voltage.

Negative Step-Down Mode

The negative step-down mode will now be explained. In the negative step-down mode, the controller 20 switches ON the bidirectional switches SW2, SW6 and the bidirectional switch SW7 alternatingly (see FIGS. 3 and 4), so that the DC voltage Vb is output from the power conversion unit 10. In the negative step-down mode, the PWM signals S2 and S6 for controlling the bidirectional switches SW2 and SW6, respectively, are reversal of the PWM signal S21, and the PWM signal S7 for controlling the bidirectional switch SW7 is the same as the PWM signal S21.

The LCL filter 32 removes the high frequency component from the output of the power conversion unit 10, and the resultant voltage is output to the AC load 3a. In this manner, the DC voltage Vb is decreased, and the negative voltage portion of the absolute single-phase AC voltage Vac that is lower than the DC voltage Vb is output to the AC load 3a.

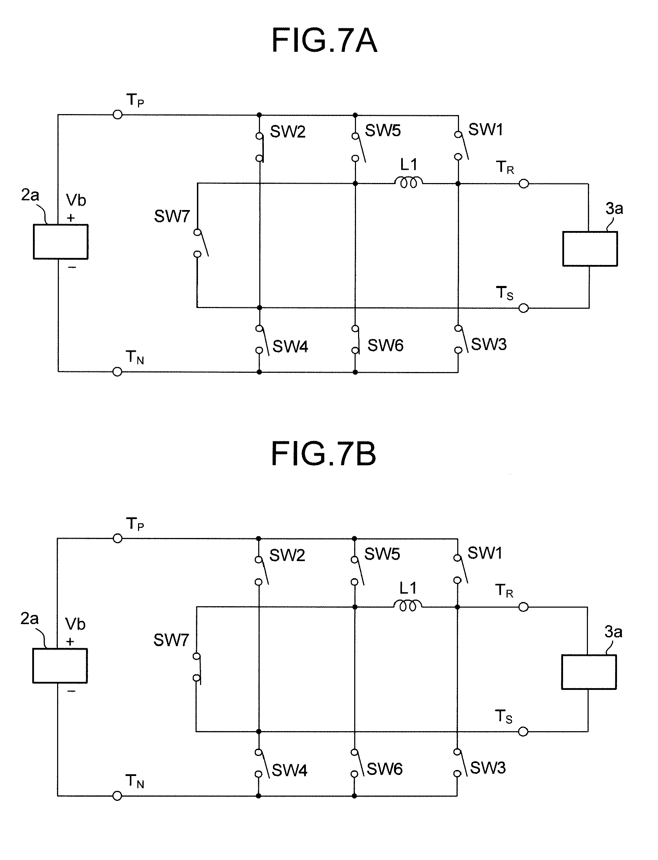

The state of the bidirectional switches SW1 to SW7 in the negative step-down mode will now be explained. FIGS. 7A and 7B are schematics illustrating the state of the bidirectional switches SW1 to SW7 in the negative step-down mode.

In the negative step-down mode, when the bidirectional switches SW2 and SW6 are ON and the bidirectional switch SW7 is OFF, the switching state will be as illustrated in FIG. 7A. The current therefore flows through a path from the positive terminal of the DC power supply 2a to the negative terminal of the DC power supply 2a via the bidirectional switch SW2, the AC load 3a, the reactor L1, and the bidirectional switch SW6.

When the bidirectional switches SW2 and SW6 are OFF and the bidirectional switch SW7 is ON, the switching state will be as illustrated in FIG. 7B. The current therefore flows in a free-wheeling mode, that is, flows from one end to the other end of the bidirectional switch SW7 via the AC load 3a and the reactor L1. In this mode, because the current flows through only one bidirectional switch, the conduction loss can be reduced.

Negative Step-Up Mode

The negative step-up mode will now be explained. In the negative step-up mode, the controller 20 always keeps the bidirectional switch SW6 ON, and switches ON the bidirectional switch SW1 and the bidirectional switch SW2 alternatingly (see FIGS. 3 and 4).

This allows the reactor L1 to store electric energy, and to discharge the stored electric energy. In the negative step-up mode, the PWM signal S2 for controlling the bidirectional switch SW2 is the same as the PWM signal S22, and the PWM signal S1 for controlling the bidirectional switch SW1 is a reversal of the PWM signal S22.

The electric energy discharged from the reactor L1 is smoothed out by the capacitor C1, and output from the power conversion unit 10. In this manner, the DC voltage Vb is increased, and the negative voltage portion of the absolute single-phase AC voltage Vac that is higher than the DC voltage Vb is output to the AC load 3a.

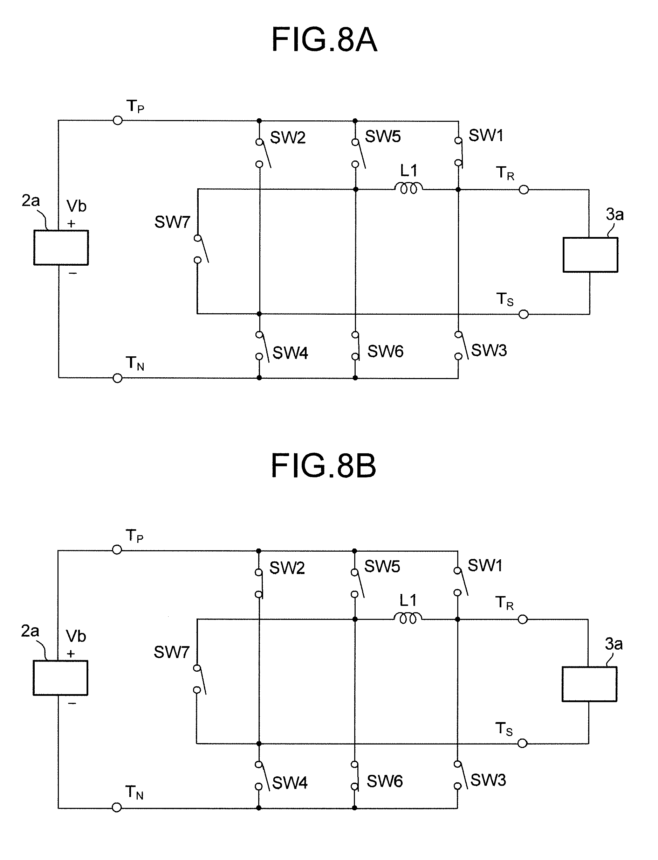

The state of the bidirectional switches SW1 to SW7 in the negative step-up mode will now be explained. FIGS. 8A and 8B are schematics illustrating the state of the bidirectional switches SW1 to SW7 in the negative step-up mode.

In the negative step-up mode, when the bidirectional switches SW1 and SW6 are ON and the bidirectional switch SW2 is OFF, the switching state will be as illustrated in FIG. 8A. The current therefore flows through a path from the positive terminal of the DC power supply 2a to the negative terminal of the DC power supply 2a via the bidirectional switch SW1, the reactor L1, and the bidirectional switch SW6. In this manner, current energy is charged to the reactor L1.

From this state, when the bidirectional switch SW1 is switched OFF and the bidirectional switch SW2 is switched ON, the switching state will be as illustrated in FIG. 8B. In this manner, a path is formed from the positive terminal of the DC power supply 2a to the negative terminal of the DC power supply 2a via the bidirectional switch SW2, the AC load 3a, the reactor L1, and the bidirectional switch SW6, and the electric energy charged in the reactor L1 is discharged to the AC load 3a.

In the manner described above, in the negative step-up mode, the controller 20 always keeps the bidirectional switch SW6 ON, and switches ON the bidirectional switch SW1 and the bidirectional switch SW2 alternatingly, so that the increased negative pulse voltage is output.

In the manner described above, in the step-down mode in the DC-to-AC conversion, the power converter 1 according to the first embodiment can reduce the conduction loss by switching ON the bidirectional switch SW7 in the free-wheeling mode, as a bidirectional switch for connecting the AC side terminals $T_R$ and $T_S$.

In the step-up mode for the AC-to-DC conversion, the power converter 1 according to the first embodiment can reduce the conduction loss by switching ON the bidirectional switch SW7, as a bidirectional switch to be switched ON in the mode for storing electric energy in the reactor L1 (hereinafter, referred to as an energy storing mode).

Second Embodiment

A power converter according to a second embodiment will now be explained. The power converter according to the second embodiment is different from the power converter 1 according to the first embodiment in that the power conversion unit has a different configuration, and the controller performs control differently. Hereunder, parts that are different from those in the first embodiment will be mainly explained, and parts that are common will be assigned with the same reference numerals and the explanations thereof will be omitted.

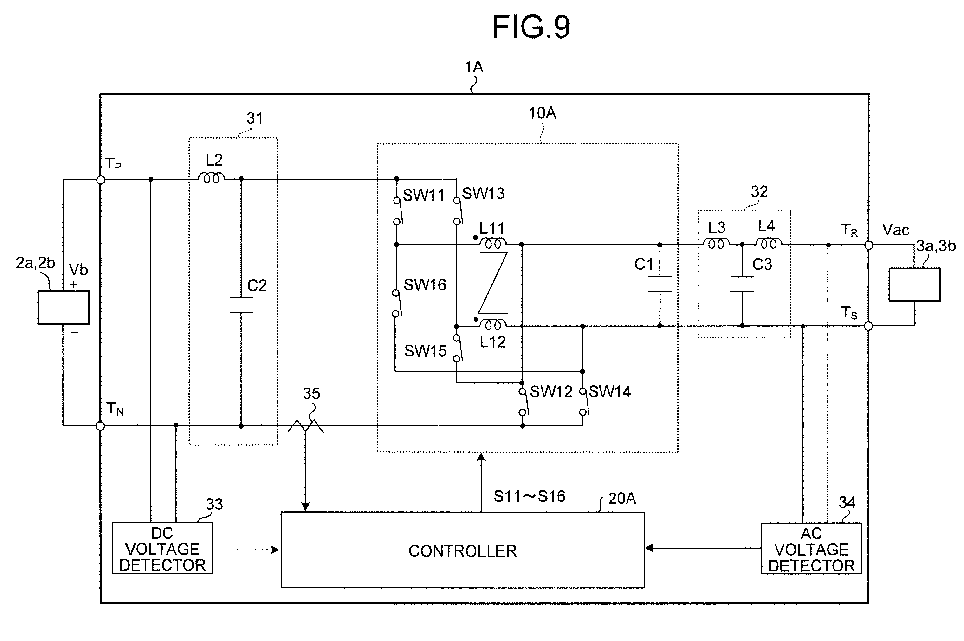

FIG. 9 is a schematic illustrating a configuration of a power converter according to the second embodiment. As illustrated in FIG. 9, a power conversion unit 10A included in this power converter 1A according to the second embodiment includes reactors L11 and L12, bidirectional switches SW11 to SW16, and the capacitor C1.

The bidirectional switches SW11 to SW16 are driven by PWM signals S11 to S16, respectively, output from a controller 20A. Each of the PWM signal S11 to S16 serves as an ON command for switching ON the corresponding one of the bidirectional switches SW11 to SW16 when the PWM signal is set to high. Each of the bidirectional switch SW11 to SW16 may be configured to be switched ON when the corresponding PWM signal is set to low. In such a configuration, each of the PWM signal S11 to S16 serves as an ON command when the PWM signal is set to low.

The reactor L11 and L12 are magnetically coupled to each other, and connected to the AC side terminals $T_R$ and $T_S$, respectively. The reactor L11 and L12 serve to suppress current flow into the capacitor C1 in the step-down mode described later, and serves as a constant current source for increasing the voltage in the step-up mode described later.

The bidirectional switch SW11 to SW14 (corresponding to an example of the first bidirectional switches) are disposed between the DC side terminals $T_P$, $T_N$ and the AC side terminals $T_R$, $T_S$. The bidirectional switches SW15 and SW16 (corresponding to examples of the second bidirectional switch) are disposed between the AC side terminals $T_R$ and $T_S$.

The bidirectional switch SW11 is disposed between the DC side terminal $T_P$ and the AC side terminal $T_R$ via the reactor L11 (corresponding to an example of a first reactor), and the bidirectional switch SW12 is disposed between the DC side terminal $T_N$ and the AC side terminal $T_R$. In other words, the bidirectional switches SW11, SW12 are connected serially between the DC side terminals $T_P$ and $T_N$ via the reactor L11.

The bidirectional switch SW13 is disposed between the DC side terminal $T_P$ and the AC side terminal $T_S$ via the reactor L12 (corresponding to an example of a second reactor), and the bidirectional switch SW14 is disposed between the DC side terminal $T_N$ and the AC side terminal $T_S$. In other words, the bidirectional switches SW13, SW14 are connected serially between the DC side terminals $T_P$ and $T_N$ via the reactor L12.

The bidirectional switch SW15 is disposed on the path between the AC side terminals $T_R$ and $T_S$, and connects the AC side terminals $T_R$ and $T_S$ via the reactor L12. The bidirectional switch SW16 is disposed on the path between the AC side terminals $T_R$ and $T_S$, and connects the AC side terminals $T_R$ and $T_S$ via the reactor L11. The controller 20A switches ON these bidirectional switches SW15 and SW16 in the free-wheeling mode in the manner described later.

Each of the bidirectional switch SW11 to SW16 includes, for example, unidirectional switches 51 and 52 (see FIG. 2) each of which is a reverse-current blocking IGBT, in the same manner as each of the bidirectional switches SW1 to SW7, and the unidirectional switches 51 and 52 are connected in parallel, in the opposite direction with respect to each other.

The controller 20A generates the PWM signal S21 and the PWM signal S22, in the same manner as the controller 20, and PWM-controls the power conversion unit 10A to convert the DC voltage Vb into the single-phase AC voltage Vac, and the single-phase AC voltage Vac into the DC voltage Vb.

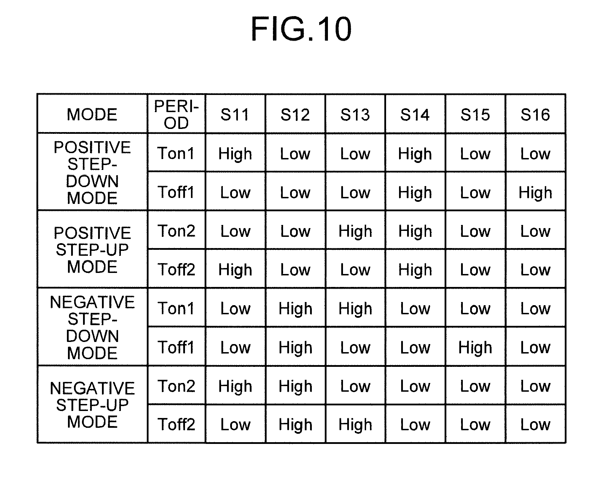

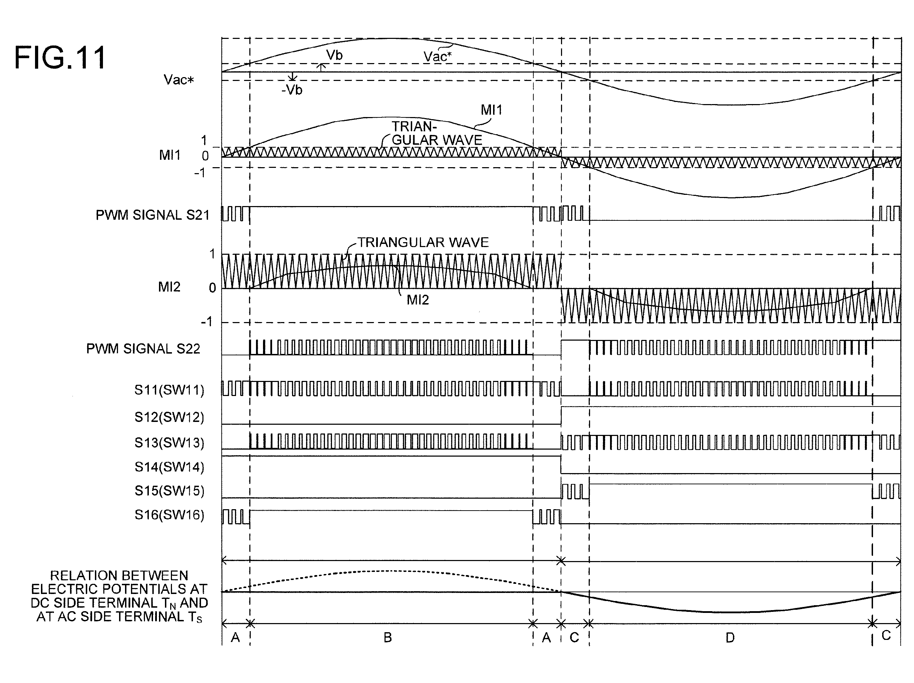

The power conversion in a direction from the DC power supply 2a to the AC load 3a will now be explained, in the same manner as in the first embodiment. FIGS. 10 and 11 are schematics corresponding to FIGS. 3 and 4, respectively, and are schematics for explaining controlling operations performed by the controller 20A in one cycle of the single-phase AC voltage Vac.

In the power conversion of the DC voltage Vb into the single-phase AC voltage Vac, the controller 20A, in the same manner as the controller 20, uses following four modes in one cycle of the single-phase AC voltage Vac to control the power conversion unit 10A: a positive step-down mode, a positive step-up mode, a negative step-down mode, and a negative step-up mode.

Positive Step-Down Mode

To begin with, the positive step-down mode will be explained. In the positive step-down mode, the controller 20A always keeps the bidirectional switch SW14 ON, and switches ON the bidirectional switch SW11 and the bidirectional switch SW16 alternatingly (see FIGS. 10 and 11), so that the DC voltage Vb is output from the power conversion unit 10A. In the positive step-down mode, the PWM signal S11 for controlling the bidirectional switch SW11 is the same as the PWM signal S21, and the PWM signal S16 for controlling the bidirectional switch SW16 is a reversal of the PWM signal S21.

The LCL filter 32 removes the high frequency component from the output from the power conversion unit 10A, and the resultant voltage is output to the AC load 3a. In this manner, the DC voltage Vb is decreased, and the positive voltage portion of the absolute single-phase AC voltage Vac that is lower than the DC voltage Vb is output to the AC load 3a.

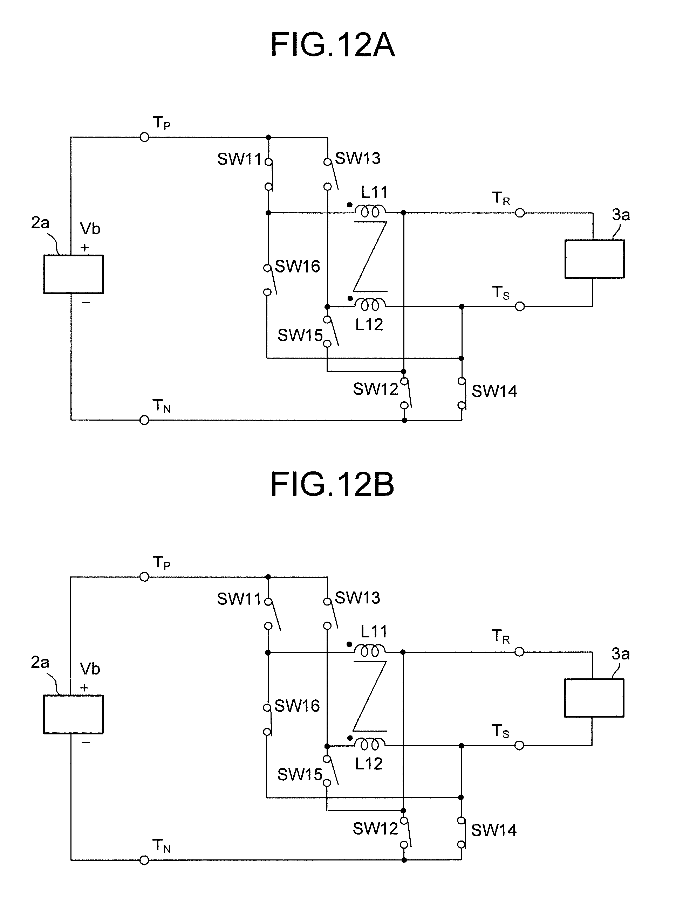

The state of the bidirectional switches SW11 to SW16 in the positive step-down mode will now be explained. FIGS. 12A and 12B are schematics illustrating the state of the bidirectional switches SW11 to SW16 in the positive step-down mode.

In the positive step-down mode, when the bidirectional switches SW11 and SW14 are ON, and the bidirectional switch SW16 is OFF, the switching state will be as illustrated in FIG. 12A. The current therefore flows through a path from the positive terminal of the DC power supply 2a to the negative terminal of the DC power supply 2a via the bidirectional switch SW11, the reactor L11, the AC load 3a, and the bidirectional switch SW14.

When the bidirectional switch SW11 is OFF and the bidirectional switches SW14 and SW16 are ON, the switching state will be as illustrated in FIG. 12B. The current therefore flows in a free-wheeling mode, that is, flows from one end of the bidirectional switch SW16 to the other end of the bidirectional switch SW16 via the reactor L11 and the AC load 3a. In this mode, because the current flows through only one bidirectional switch, the conduction loss can be reduced.

In the free-wheeling mode, the bidirectional switch SW14 is always kept ON, so that the DC side terminal $T_N$ is kept connected to the AC side terminal $T_S$. Therefore, it is possible to suppress application of a pulse-like common-mode surge voltage to the DC side terminals $T_P$ and $T_N$ in the positive step-down mode.

Positive Step-up Mode

The positive step-up mode will now be explained. In the positive step-up mode, the controller 20A always keeps the bidirectional switch SW14 ON, and switches ON the bidirectional switch SW11 and the bidirectional switch SW13 alternatingly (see FIGS. 10 and 11).

In this manner, electric energy is stored in the reactor L12, and the electric energy is discharged from the reactor L11 that is magnetically coupled to the reactor L12. In the positive step-up mode, the PWM signal S13 for controlling the bidirectional switch SW13 is the same as the PWM signal S22, and the PWM signal S11 for controlling the bidirectional switch SW11 is a reversal of the PWM signal S22.

The electric energy discharged from the reactor L11 is smoothed out by the capacitor C1, and output from the power conversion unit 10A. In this manner, the DC voltage Vb is increased, and a positive voltage portion of the absolute single-phase AC voltage Vac that is higher than the DC voltage Vb is output to the AC load 3a.

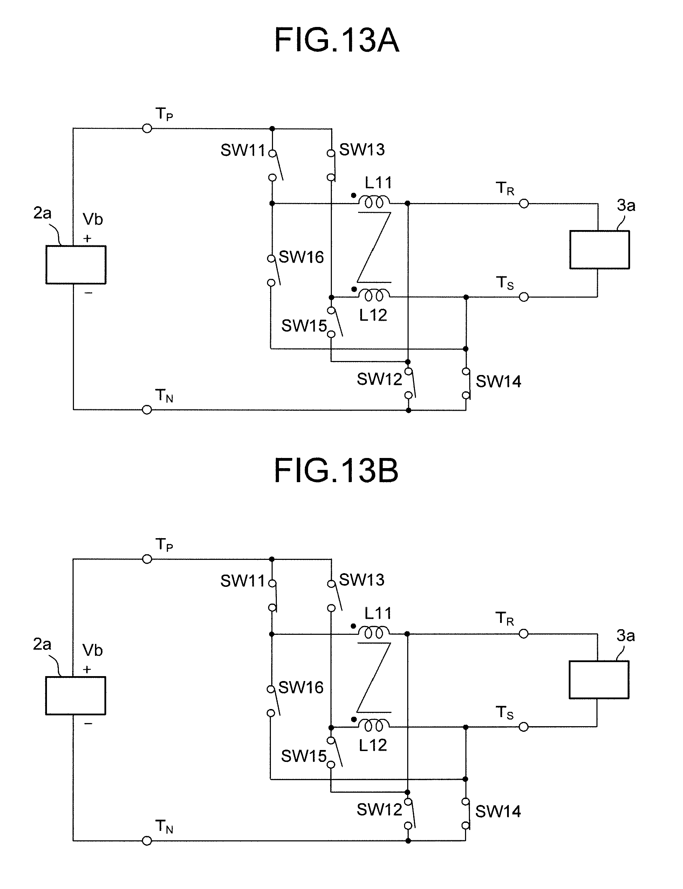

The state of the bidirectional switches SW11 to SW16 in the positive step-up mode will now be explained. FIGS. 13A and 13B are schematics illustrating the state of the bidirectional switches SW11 to SW16 in the positive step-up mode.

In the positive step-up mode, when the bidirectional switches SW13 and SW14 is ON and the bidirectional switch SW11 is OFF, the switching state will be as illustrated in FIG. 13A. The current therefore flows through a path from the positive terminal of the DC power supply 2a to the negative terminal of the DC power supply 2a via the bidirectional switch SW13, the reactor L12, and the bidirectional switch SW14. In this manner, current energy is charged to the reactor L12.

From this state, when the bidirectional switch SW13 is switched OFF, and the bidirectional switch SW11 is switched ON, the switching state will be as illustrated in FIG. 13B. In this manner, a path is formed from the positive terminal of the DC power supply 2a to the negative terminal of the DC power supply 2a via the bidirectional switch SW11, the reactor L11, the AC load 3a, and the bidirectional switch SW14, and the electric energy charged in the reactor L12 is discharged from the reactor L11 to the AC load 3a.

In the manner described above, in the positive step-up mode, the controller 20A always keeps the bidirectional switch SW14 ON, and switches ON the bidirectional switch SW11 and the bidirectional switch SW13 alternatingly, to output an increased positive pulse voltage. In the positive step-up mode, the bidirectional switch SW14 is always kept ON, so that the DC side terminal $T_N$ is kept connected to the AC side terminal $T_S$. Therefore, it is also possible to suppress application of a pulse-like common-mode surge voltage to the DC side terminals $T_P$ and $T_N$ in the positive step-up mode.

Negative Step-Down Mode

The negative step-down mode will now be explained. In the negative step-down mode, the controller 20A always keeps the bidirectional switch SW12 ON, and switches ON the bidirectional switch SW13 and the bidirectional switch SW15 alternatingly (see FIGS. 10 and 11), so that the DC voltage Vb is output from the power conversion unit 10A. In the negative step-down mode, the PWM signal S15 for controlling the bidirectional switch SW15 is the same as the PWM signal S21, the PWM signal S13 for controlling the bidirectional switch SW13 is a reversal of the PWM signal S21.

The LCL filter 32 removes the high frequency component from the output of the power conversion unit 10A, and the resultant voltage is output to the AC load 3a. In this manner, the DC voltage Vb is decreased, and the negative voltage portion of the absolute single-phase AC voltage Vac that is lower than the DC voltage Vb is output to the AC load 3a.

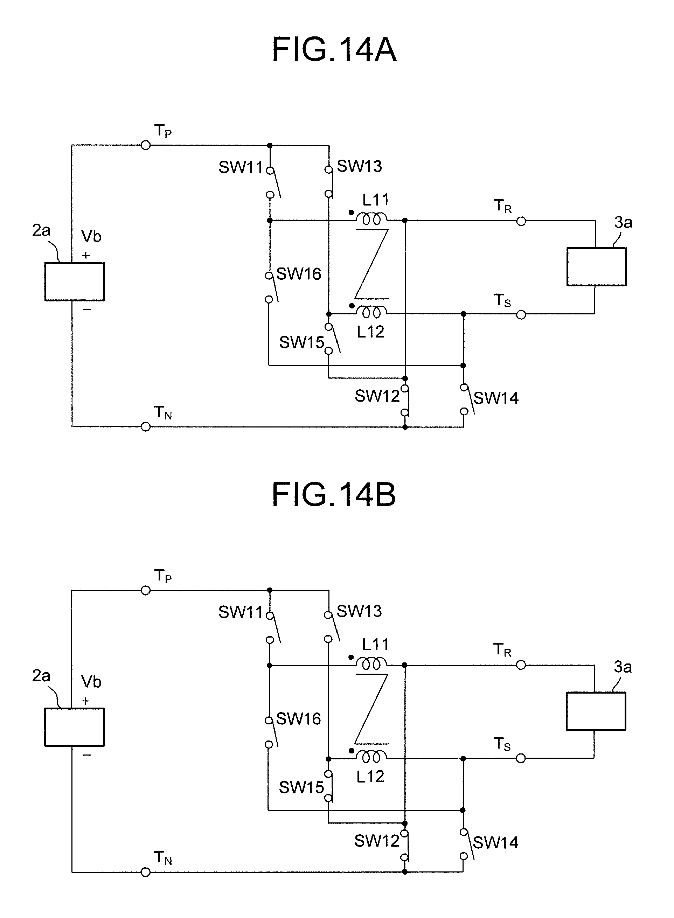

The state of the bidirectional switches SW11 to SW16 in the negative step-down mode will now be explained. FIGS. 14A and 14B are schematics illustrating the state of the bidirectional switches SW11 to SW16 in the negative step-down mode.

In the negative step-down mode, when the bidirectional switches SW12 and SW13 are ON and the bidirectional switch SW15 is OFF, the switching state will be as illustrated in FIG. 14A. The current therefore flows through a path from the positive terminal of the DC power supply 2a to the negative terminal of the DC power supply 2a via the bidirectional switch SW13, the reactor L12, the AC load 3a, and the bidirectional switch SW12.

When the bidirectional switch SW13 is OFF and the bidirectional switches SW12 and SW15 is ON, the switching state will be as illustrated in FIG. 14B. The current therefore flows in a free-wheeling mode, that is, flows from one end to the other end of the bidirectional switch SW15 via the reactor L12 and the AC load 3a. In this mode, because the current flows through only one bidirectional switch, the conduction loss can be reduced.

In the free-wheeling mode, the bidirectional switch SW12 is always kept ON, so that the DC side terminal $T_N$ is connected to the AC side terminal $T_R$. Therefore, it is possible to suppress application of a pulse-like common-mode surge voltage to the DC side terminals $T_P$ and $T_N$ in the negative step-down mode.


Negative Step-Up Mode

The negative step-up mode will now be explained. In the negative step-up mode, the controller 20A always keeps the bidirectional switch SW12 ON, and switches ON the bidirectional switch SW11 and the bidirectional switch SW13 alternatingly (see FIGS. 10 and 11).

In this manner, electric energy is stored in the reactor L11, and discharged from the reactor L12 that is magnetically coupled to the reactor L11. In the negative step-up mode, the PWM signal S13 for controlling the bidirectional switch SW13 is the same as the PWM signal S22, and the PWM signal S11 for controlling the bidirectional switch SW11 is a reversal of the PWM signal S22.

The electric energy discharged from the reactor L12 is smoothed out by the capacitor C1, and output from the power conversion unit 10A. In this manner, the DC voltage Vb is increased, and the negative voltage portion of the absolute single-phase AC voltage Vac that is higher than the DC voltage Vb is output to the AC load 3a.

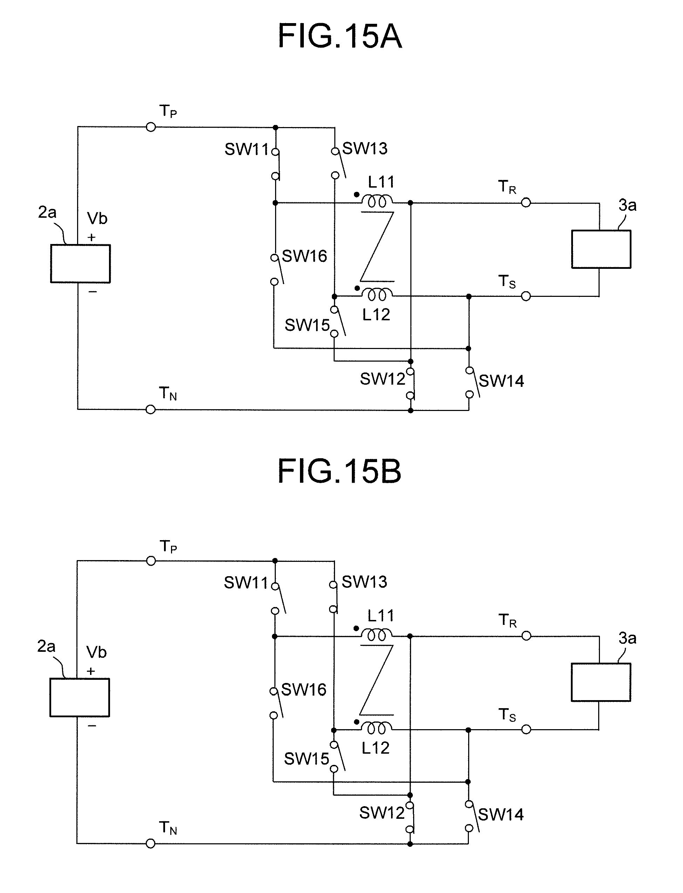

The state of the bidirectional switches SW11 to SW16 in the negative step-up mode will now be explained. FIGS. 15A and 15B are schematics illustrating the state of the bidirectional switches SW11 to SW16 in the negative step-up mode.

In the negative step-up mode, when the bidirectional switches SW11 and SW12 are ON and the bidirectional switch SW13 is OFF, the switching state will be as illustrated in FIG. 15A. The current therefore flows through a path from the positive terminal of the DC power supply 2a to the negative terminal of the DC power supply 2a via the bidirectional switch SW11, the reactor L11, and the bidirectional switch SW12. In this manner, current energy is charged to the reactor L11.

From this state, when the bidirectional switch SW11 is switched OFF and the bidirectional switch SW13 is switched ON, the switching state will be as illustrated in FIG. 15B. In this manner, a path is formed from the positive terminal of the DC power supply 2a to the negative terminal of the DC power supply 2a via the bidirectional switch SW13, the reactor L12, the AC load 3a, and the bidirectional switch SW12, and the electric energy charged in the reactor L11 is discharged from the reactor L12 to the AC load 3a.

In the manner described above, in the negative step-up mode, the controller 20A always keeps the bidirectional switch SW12 ON, and switches ON the bidirectional switch SW11 and the bidirectional switch SW13 alternatingly, so that the increased negative pulse voltage is output. In the negative step-up mode, the bidirectional switch SW12 is always kept ON, so that the DC side terminal $T_N$ is connected to the AC side terminal $T_R$. Therefore, it is also possible to suppress application of a pulse-like common-mode surge voltage to the DC side terminals $T_P$ and $T_N$ in the negative step-up mode.

In the positive step-up mode in the AC-to-DC conversion, the power converter 1A according to the second embodiment switches ON the bidirectional switches SW14 and SW16, and switches OFF the bidirectional switches SW11 to SW13 in the energy storing mode for storing electric energy in the reactor L11. In the negative step-up mode in the AC-to-DC conversion, the power converter 1A switches ON the bidirectional switches SW12 and SW16, and switches OFF the bidirectional switches SW11, SW13, and SW14 in the energy storing mode in which the electric energy is stored in the reactor L12. In this manner, it is possible to suppress application of a pulse-like common-mode surge voltage to the DC side terminals $T_P$ and $T_N$ in the energy storing mode.

In the DC-to-AC conversion, for example, the bidirectional switch SW14 may be switched OFF in the positive step-down mode, and the bidirectional switch SW12 may be switched OFF in the free-wheeling mode of the negative step-down mode so that a high-frequency potential variation is not introduced to the DC power supply 2a. In the AC-to-DC conversion, for example, the bidirectional switch SW14 may be switched OFF in the positive step-up mode, and the bidirectional switch SW12 may be switched OFF in the energy storing mode of the negative step-up mode so that a high frequency potential variation is not introduced to the DC power supply 2a. In this manner, it is possible to suppress application of a pulse-like common-mode surge voltage to the DC side terminals $T_P$ and $T_N$.

In the descriptions of the first and the second embodiments described above, an example of the power converter 1, 1A capable of increasing and decreasing voltage is used, but the same control can be performed in a power converter only decreasing voltage to stabilize the common-mode voltage at the DC side terminals $T_P$ and $T_N$.

Furthermore, in the power converter 1, 1A, the DC load 2b may be connected to the DC side terminals $T_P$ and $T_N$, the AC power supply 3b may be connected to the AC side terminals $T_R$ and $T_S$, and the AC voltage supplied by the AC power supply 3b may be converted into the DC voltage Vb and output to the DC load 2b, as mentioned earlier. In such a configuration, the same control can stabilize the common-mode voltage.

Additional advantageous effects and modifications may be easily made by those skilled in the art. Therefore, a wider range of embodiments of the present invention are not limited to the specific and representative embodiments expressed and described above, and these embodiments may be modified variously, without deviating from the spirit and the scope of the comprehensive concept of the present invention defined by the appended claims and their equivalent.

Reference Signs List

| 1, 1A | power converter |
| 2a | DC power supply |
| 2b | DC load |
| 3a | AC load |
| 3b | AC power supply |
| 10, 10A | power conversion unit |
| 20, 20A | controller |
| 30 | DC voltage detector |
| 31 | LC filter |
| 32 | LCL filter |
| 33 | DC voltage detector |
| 34 | AC voltage detector |
| 35 | DC current detector |
| L1 to L4, L11, L12 | reactors |
| SW1 to SW7, SW11 to SW16 | bidirectional switches |

**Claims**

1. A power converter comprising:

    a power conversion unit that includes a plurality of first bidirectional switches that are disposed between a plurality of direct current (DC) side terminals connected to a DC power supply or a DC load and a plurality of alternating current (AC) side terminals connected to an AC load or an AC power supply, and a second bidirectional switch and a reactor that are disposed between the AC side terminals; and
    a controller configured to control the power conversion unit to perform power conversion between DC power and AC power, wherein
    the controller keeps the second bidirectional switch ON in any one of or both of a free-wheeling mode in a step-down power conversion from the DC power into the AC power, and an energy storing mode in which electric energy is stored in the reactor in a step-up power conversion from the AC power to the DC power.

2. The power converter according to claim 1, wherein the controller keeps all of the first bidirectional switches OFF in any one of or both of the free-wheeling mode and the energy storing mode.

3. The power converter according to claim 1, wherein the controller keeps OFF all of the first bidirectional switches except for one first bidirectional switch among the plurality of first bidirectional switches OFF in any one of or both of the free-wheeling mode and the energy storing mode.

4. The power converter according to claim 1 or 2, wherein
   the plurality of first bidirectional switches include:

    two bidirectional switches that are connected serially between the DC side terminals, and have a connection point between the two bidirectional switches connected to one of the AC side terminals;

two bidirectional switches that are connected serially between the DC side terminals, and have a connection point between the two bidirectional switches connected to the one of the AC side terminals via the reactor;
two bidirectional switches that are connected serially between the DC side terminals, and have a connection point between the two bidirectional switches connected to the other of the AC side terminals, and

the second bidirectional switch is connected between the AC side terminals via the reactor.

5. The power converter according to any one of claims 1 to 3, wherein the reactor includes a first reactor and a second reactor that are magnetically coupled to each other, and each of which includes one end connected to the corresponding one of plurality of the AC side terminals,
the first bidirectional switches include:

two bidirectional switches that are connected serially between the DC side terminals via the first reactor; and
two bidirectional switches that are connected serially between the DC side terminals via the second reactor, and

the second bidirectional switch includes:

a bidirectional switch that is connected between the DC side terminals and is connected between the AC side terminals via the first reactor; and
a bidirectional switch that is connected between the DC side terminals and is connected between the AC side terminals via the second reactor.

6. The power converter according to claim 4 or 5, further comprising a capacitor connected between the AC side terminals, wherein
the controller controls the first bidirectional switches and the second bidirectional switch to increase and decrease a DC voltage supplied from the DC side terminals, to generate an AC voltage, and to output the AC voltage from the AC side terminals.

7. The power converter according to any one of claims 1 to 6, further comprising a capacitor connected between the DC side terminals, wherein
the controller controls the first bidirectional switches and the second bidirectional switch to increase and decrease an AC voltage supplied from the AC side terminals, to generate a DC voltage, and to output the DC voltage from the DC side terminals.

8. The power converter according to any one of claims 1 to 7, wherein the controller controls the power conversion unit to convert power bidirectionally between the DC power supply or the DC load, and the AC load or the AC power supply.

# FIG.1

EP 2 876 801 A1

# FIG.2

SW1~SW7

51    52

C    S

G    G

S    C

# FIG.3

| MODE | PERI-OD | S1 | S2 | S3 | S4 | S5 | S6 | S7 |
|---|---|---|---|---|---|---|---|---|
| POSITIVE STEP-DOWN MODE | Ton1 | Low | Low | Low | High | High | Low | Low |
| | Toff1 | Low | Low | Low | Low | Low | Low | High |
| POSITIVE STEP-UP MODE | Ton2 | Low | Low | High | Low | High | Low | Low |
| | Toff2 | Low | Low | Low | High | High | Low | Low |
| NEGATIVE STEP-DOWN MODE | Ton1 | Low | High | Low | Low | Low | High | Low |
| | Toff1 | Low | Low | Low | Low | Low | Low | High |
| NEGATIVE STEP-UP MODE | Ton2 | High | Low | Low | Low | Low | High | Low |
| | Toff2 | Low | High | Low | Low | Low | High | Low |

# FIG.4

EP 2 876 801 A1

# FIG.5A

# FIG.5B

# FIG.6A

# FIG.6B

# FIG.7A

# FIG.7B

# FIG.8A

# FIG.8B

FIG.9

# FIG.10

| MODE | PERI-OD | S11 | S12 | S13 | S14 | S15 | S16 |
|---|---|---|---|---|---|---|---|
| POSITIVE STEP-DOWN MODE | Ton1 | High | Low | Low | High | Low | Low |
| | Toff1 | Low | Low | Low | High | Low | High |
| POSITIVE STEP-UP MODE | Ton2 | Low | Low | High | High | Low | Low |
| | Toff2 | High | Low | Low | High | Low | Low |
| NEGATIVE STEP-DOWN MODE | Ton1 | Low | High | High | Low | Low | Low |
| | Toff1 | Low | High | Low | Low | High | Low |
| NEGATIVE STEP-UP MODE | Ton2 | High | High | Low | Low | Low | Low |
| | Toff2 | Low | High | High | Low | Low | Low |

# FIG.11

# FIG.12A

# FIG.12B

# FIG.13A

# FIG.13B

# FIG.14A

# FIG.14B

# FIG.15A

# FIG.15B

### INTERNATIONAL SEARCH REPORT

International application No.

PCT/JP2012/068509

**A. CLASSIFICATION OF SUBJECT MATTER**
*H02M7/48*(2007.01)i, *H02M7/12*(2006.01)i, *H02M7/797*(2006.01)i

According to International Patent Classification (IPC) or to both national classification and IPC

**B. FIELDS SEARCHED**

Minimum documentation searched (classification system followed by classification symbols)
H02M7/48, H02M7/12, H02M7/797

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/063573 A1 (Yaskawa Electric Corp.), 18 May 2012 (18.05.2012), all pages (Family: none) | 1–8 |
| A | JP 2011-259621 A (Kyushu Electric Power Co., Ltd.), 22 December 2011 (22.12.2011), all pages (Family: none) | 1–8 |
| A | JP 2012-80753 A (Meidensha Corp.), 19 April 2012 (19.04.2012), all pages (Family: none) | 1–8 |

☐ Further documents are listed in the continuation of Box C.     ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 28 September, 2012 (28.09.12) | Date of mailing of the international search report <br> 09 October, 2012 (09.10.12) |
|---|---|
| Name and mailing address of the ISA/ <br> Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011041457 A